# EUROPÄISCHE PATENTSCHRIFT

(11) **EP 3 250 004 B1**
(45) Veröffentlichungstag und Bekanntmachung des Hinweises auf die Patenterteilung: **13.03.2019**
(21) Anmeldenummer: 16171248.4
(22) Anmeldetag: 25.05.2016
(51) Int. Cl.: H05B 6/10

(54) **VORRICHTUNG ZUR INDUKTIVEN ERWÄRMUNG EINES BAUTEILS**
DEVICE FOR INDUCTIVELY HEATING A COMPONENT
DISPOSITIF DE CHAUFFAGE INDUCTIF D'UN COMPOSANT

(43) Veröffentlichungstag der Anmeldung: 29.11.2017
(73) Patentinhaber: MTU Aero Engines AG, 80995 München (DE)
(72) Erfinder: Casper, Johannes, 80807 München (DE); Hanrieder, Herbert, 85411 Hohenkammer (DE)

(56) Entgegenhaltungen:
- WO-A1-2014/057692
- AT-B- 365 027
- DE-U1-202009 001 136
- US-A1- 2015 273 560

## Beschreibung

### Technisches Gebiet

Die vorliegende Erfindung betrifft eine Vorrichtung zur induktiven Erwärmung eines Bauteils.

### Stand der Technik

Die induktive Erwärmung von Bauteilen kann z. B. unterstützend bei generativen Fertigungsverfahren von Interesse sein. Diese erlauben nicht nur einen schnellen Aufbau von Prototypen, sondern es können bspw. auch aufgrund ihrer Geometrie anderweitig schwer herzustellende Bauteile bzw. Bauteile mit bestimmten Materialeigenschaften hergestellt werden. Der Aufbau erfolgt schichtweise, und es lassen sich auch Geometrien erzeugen, die bspw. mit einem gießtechnischen Verfahren nicht zugänglich wären. Bei dem schichtweisen Aufbau wird sequenziell Schicht für Schicht eines pulverförmigen Bauteilwerkstoffs aufgetragen. Nach dem Aufbringen einer Schicht wird diese selektiv bestrahlt, z. B. mit einem Laser, und so in einem gewünschten Bereich verfestigt (z. B. durch Aufschmelzen oder Sintern). Anschließend wird die nächste Pulverschicht aufgetragen und der herzustellenden Bauteilgeometrie entsprechend bereichsweise verfestigt. Dieser Vorgang kann, wie nachstehend im Einzelnen erläutert, durch induktives Heizen unterstützt werden und illustriert insoweit ein bevorzugtes Anwendungsgebiet, das den Gegenstand aber nicht in seiner Allgemeinheit beschränken soll. Das Dokument WO 2014/057692 A1 offenbart eine Induktionsheizvorrichtung zur induktiven Erwärmung eines Bauteils nach dem Stand der Technik mit einer Bauteil-Platziereinheit für das Bauteil, einer Induktionsspule, mit welcher das Bauteil induktiv heizbar ist, einer elektrischen Zuleitung für die Induktionsspule, wobei die elektrische Zuleitung über einen Kontakt geführt ist, den aneinander anliegende Anlageflächen bilden, die bei einem Versetzen der Induktionsspule in die unterschiedlichen Relativanordnungen in Kontaktlage aneinander relativ zueinander verschoben werden.

### Darstellung der Erfindung

Der vorliegenden Erfindung liegt die Aufgabe zugrunde, eine besonders vorteilhafte Vorrichtung zur induktiven Erwärmung eines Bauteils anzugeben.

Erfindungsgemäß wird diese Aufgabe mit den Merkmalen des Anspruchs 1 gelöst.

Bevorzugte Ausführungsformen finden sich in den abhängigen Ansprüchen und der gesamten Offenbarung, wobei in der Darstellung nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen.

Die hauptanspruchsgemäße Induktionsvorrichtung weist eine Induktionsspule auf, mit der ein Bauteil induktiv heizbar ist. Im Falle der generativen Fertigung kann, indem das Bauteil während seiner Herstellung induktiv geheizt wird (zusätzlich zu der eigentlichen Bestrahlung mit bspw. einem Laser), z. B. einer Rissbildung im Bauteil aufgrund von Temperaturgradienten vorgebeugt werden. Dies ist ein bevorzugtes Anwendungsgebiet einer vorliegend beschriebenen Induktionsvorrichtung, ein induktives Heizen kann aber bspw. auch beim Verschweißen schwer schweißbarer Werkstoffe von Interesse sein, etwa beim Laserschweißen.

Bei der erfindungsgemäßen Induktionsvorrichtung ist die Induktionsspule an einer Positioniereinheit angeordnet, mit der sie bevorzugt automatisiert in unterschiedliche Relativanordnungen zu einer Bauteil-Platziereinheit gebracht werden kann, an welcher in der Anwendung das Bauteil angeordnet ist. Die Positioniereinheit ermöglicht eine Positionierung und somit Anpassung des induktiven Heizens an die Bauteilgeometrie bzw. den Bearbeitungsfortschritt. Zum Betreiben der Induktionsspule wird bzw. ist diese über elektrische Zuleitungen an einen Schwingkreis angeschlossen, sodass sie mit einer Wechselspannung beaufschlagt werden kann.

Erfindungsgemäß ist eine solche elektrische Zuleitung der Induktionsspule über einen Kontakt geführt, den aneinander anliegende Anlageflächen bilden, die in Kontaktlage aneinander relativ zueinander verschoben werden, wenn die Induktionsspule in die unterschiedlichen Relativanordnungen versetzt wird. Der elektrische Kontakt, über den die elektrische Zuleitung zu der bewegbaren Induktionsspule realisiert ist, ist also bspw. ein Schleifkontakt. Anfängliche Versuche auf diesem Gebiet gingen hingegen dahin, die Induktionsspule über ein flexibles, biegbares Kupferseil bzw. sogenannte "Glühkabel" anzuschließen. Aufgrund der vergleichsweise großen zu übertragenden Leistungen muss jedoch die Zuleitung einen gewissen Mindestquerschnitt haben. Es wurde allerdings festgestellt, dass entsprechende Kupferseile bzw. Kabel unter der fraglichen Beanspruchung, also dem wiederholten Verbiegen beim Versetzen der Induktionsspule, eine verhältnismäßig kurze Lebensdauer haben. Der große Seilquerschnitt verringert die Flexibilität und erhöht die Materialbeanspruchung beim Biegen.

Mit dem vorliegenden Ansatz, den Kontakt mit zueinander verschobenen Anlageflächen zu realisieren, können hingegen die übrigen Zuleitungsteile bspw. auch starr ausgeführt sein. Es lässt sich bspw. der Verschleiß verringern und die Standzeit erhöhen, was Wartungsaufwand bzw. -kosten reduzieren helfen kann. Andererseits lassen sich so auch vergleichsweise große Kontaktflächen realisieren, kann die elektrische Zuleitung also auch für größere Leistungen ausgelegt werden.

Die Anlageflächen des Kontakts können im Allgemeinen z. B. auch von einem elektrisch leitfähigen Kunststoff bzw. sogar auch Papier gebildet werden, vorzugsweise wird zumindest eine der Anlageflächen von einem Metall gebildet. Bevorzugt kann auch sein, dass die Anlageflächen von zwei Materialien unterschiedlicher Härte gebildet werden, z. B. Kupfer und Grafit. Eine Anlagefläche kann von dem relativ bewegbar geführten Zuleitungsteil selbst gebildet werden oder auch von einer Beschichtung des Zuleitungsteils im Bereich des Kontakts. Es kann bspw. auch eine Schleifbürste die Anlagefläche bilden, der Kontakt also ein Bürstenkontakt sein. Bevorzugt bildet aber ein durchgehendes Material die Anlagefläche(n).

Generell sind "ein"/"eine" im Rahmen dieser Offenbarung als unbestimmte Artikel zu lesen, also ohne ausdrücklich gegenteilige Angabe immer auch als "mindestens ein" / "mindestens eine". Wie auch nachstehend noch im Einzelnen deutlich wird, kann die elektrische Zuleitung also bspw. auch über mehrere jeweils nach Art eines Schleifkontakts aufgebaute Kontakte geführt sein, was für die Induktionsspule entsprechend komplexere Bewegungsmuster ermöglicht. Ferner wird auch der Einfachheit halber vorrangig auf "eine" bzw. "die" Zuleitung Bezug genommen, sind aber für die Induktionsspule selbstverständlich zwei über jeweils mindestens einen entsprechenden Kontakt geführte Zuleitungen bevorzugt.

Als "Induktionsspule" wird ganz allgemein jede Leitergeometrie verstanden, die ein induktives Heizen ermöglicht. In einem einfachen Fall könnte es sich dabei auch lediglich um eine Leiterschleife handeln, es ist jedoch auch eine Anordnung mit einer Mehrzahl (mindestens zwei) Windungen möglich, die in Form einer Zylinder- oder bevorzugt Flachspule angeordnet sein können. Mögliche Obergrenzen der Windungszahl können bspw. bei höchstens 50, 40, 30, 20, 10 bzw. 5 liegen (in der Reihenfolge der Nennung zunehmend bevorzugt). Die Induktionsspule wird bevorzugt gekühlt, bspw. mit Wasser oder auch einer gesonderten Kühlflüssigkeit oder mit Prozessgas. Dazu kann die Induktionsspule bspw. hohl ausgeführt, also mit einem Kühlkanal im Inneren vorgesehen sein. Unabhängig davon im Einzelnen wird das Kühlmedium bevorzugt über ein flexibles Leitungssystem (mit Vor- und Rücklauf) geführt, also bspw. durch Schläuche.

Generell kann das "Bauteil" ein bereits gefertigtes Bauteil sein, das bspw. nur noch induktiv geglüht wird; der Begriff ist aber ebenso auf nur einen Teilbereich einer dann erst nach weiterer Verarbeitung fertigen Komponente zu lesen, bspw. einer Verarbeitung durch Verschweißen. An der Bauteil-Platziereinheit kann insbesondere auch Halbzeug als Bauteil angeordnet werden. Ferner wird speziell im Kontext der generativen Fertigung der Begriff "Bauteil" auch für das im Entstehen befindliche Bauteil, also für dieses während seines schichtweisen Aufbaus, verwendet.

Die "Bauteil-Platziereinheit" kann bspw. ein Träger sein, auf dem das Bauteil abgestellt ist, insbesondere bei der generativen Fertigung, wenn die Platziereinheit als Pulverbettaufnahme ausgestaltet ist (siehe unten im Detail). Anderseits ist unter "Bauteil-Platziereinheit" aber bspw. auch ein Halter zu verstehen, an dem das Bauteil während des induktiven Heizens gehalten sein kann, bspw. kraftschlüssig. In allgemeinen Worten dient die Bauteil-Platziereinheit der Bauteilpositionierung, legt sie also dessen Position jedenfalls innerhalb gewisser Grenzen fest; deshalb dient sie als Referenz für das Versetzen der Induktionsspule mittels der Positioniereinheit.

In bevorzugter Ausgestaltung weist die Positioniereinheit ein Führungsteil und ein daran bewegbar geführtes Bewegungsteil auf, an letzterem ist die Induktionsspule angeordnet, bevorzugt daran befestigt. Das Führungs- und das Bewegungsteil sind über ein Lager relativ zueinander bewegbar, wobei mit dieser geführten Bewegung die Induktionsspule in unterschiedliche Relativanordnungen zur Bauteil-Platziereinheit und damit zum Bauteil gebracht werden gebracht wird.

In bevorzugter Ausgestaltung sind das Führungs- und das Bewegungsteil über ein Gleitlager aneinander geführt. Um die Gleitfähigkeit zu verbessern, kann in das Lager bspw. ein Schmiermittel eingebracht sein, etwa auf der Basis von Grafit bzw. ein Kontaktfett. Dies kann auch generell bevorzugt sein, also auch wenn das Lager bspw. nicht als Gleit-, sondern als Wälzlager ausgestaltet wäre.

Bei einer bevorzugten Ausführungsform fallen eine Kontaktfläche des Kontakts und eine Gleitfläche des Gleitlagers zumindest teilweise zusammen, bevorzugt beinhaltet die Gleitfläche die Kontaktfläche. Die Kontaktfläche ist jene Fläche, in welcher die Anlageflächen in einer jeweiligen Relativanordnung der Induktionsspule tatsächlich aneinander anliegen; demgegenüber ist eine Anlagefläche die insgesamt, bei Betrachtung sämtlicher Relativanordnungen zur Anlage vorgesehene Fläche. In der Gleitfläche des Gleitlagers stützen sich das Führungs- und das Bewegungsteil gegeneinander ab (in einer jeweiligen Relativanordnung der Induktionsspule). Es wird bei dieser Ausführungsform also vorteilhafterweise eine zur Lagerung der Bewegung genutzte Fläche zugleich als elektrische Kontaktfläche genutzt. Mit dieser Ausgestaltung lässt sich bspw. ein platzsparender Aufbau realisieren, was nicht nur im Falle der generativen Fertigung in einer Prozesskammer (siehe unten im Detail) angesichts der dort begrenzten Raumverhältnisse Vorteile bieten kann.

Generell kann in den Kontakt zur Verringerung eines Kontaktwiderstands eine Leitpaste eingebracht sein, im Falle des kombinierten Gleitlagers/Schleifkontakts kann diese bevorzugt zugleich auch eine Schmierfunktion erfüllen, siehe vorne. Alternativ zu dem Gleitlager ist im Allgemeinen zur Lagerung von Führungs- und Bewegungsteil auch ein Wälzlager denkbar, das dann bevorzugt zugleich auch den elektrischen Kontakt bilden kann. Die Relativversetzung der Anlageflächen in Kontaktlage könnte dementsprechend auch ein Rollkontakt sein. Bevorzugt liegen die Anlageflächen jedoch flächig aneinander an und gleiten sie in der flächigen Anlage aneinander (Gleitkontakt bzw. auch als Schleifkontakt bezeichnet).

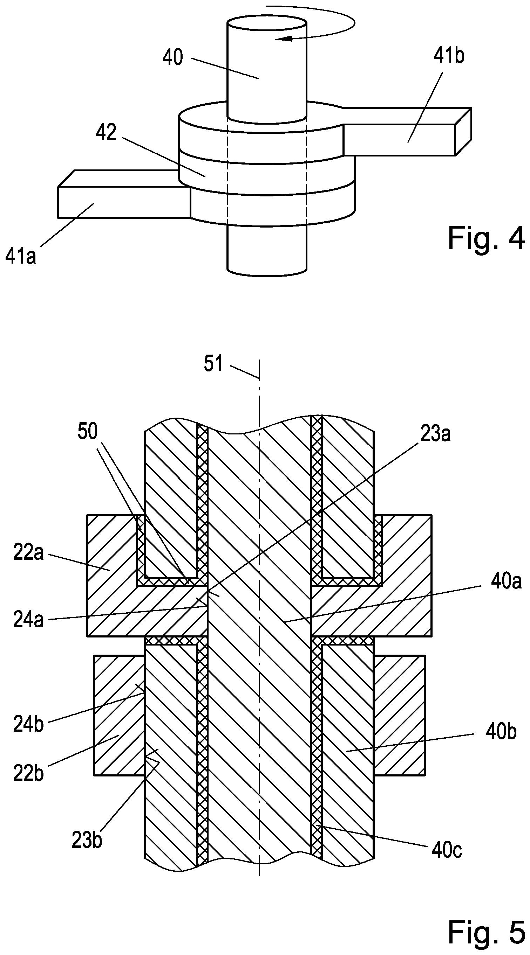

Die Gleitfläche, welche die Kontaktfläche beinhaltet, ist nicht zwingend die einige Führungsfläche des Lagers. Es kann auch eine zusätzliche Führungsfläche geben, die einen anderen Freiheitsgrad der Relativbewegung einschränkt; diese zusätzliche Führungsfläche kann dann bspw. auch nicht elektrisch leitend ausgebildet sein. So könnten bspw. das Führungs- und das Bewegungsteil jeweils drehbar an einer gemeinsamen Achse geführt sein, die als Isolator ausgebildet keinen elektrischen Kontakt zwischen den beiden vermittelt. Der elektrische Kontakt könnte dann durch eine Anlage von Führungs- und Bewegungsteil direkt aneinander realisiert sein, wobei die entsprechende Kontaktfläche dann zugleich die Verschiebbarkeit der beiden Teile entlang der Achse begrenzt und eine Gleitfläche darstellt (in der die beiden Teile aneinander gleiten, wenn sie relativ zueinander um die Achse verdreht werden), vgl. auch das Ausführungsbeispiel gemäß Figur 5 mit Beschreibung zur Illustration (dort als "Drehleiter" bezeichnet).

Im Folgenden werden nun zunächst zwei unterschiedliche Möglichkeiten zur Lagerung von Führungs- und Bewegungsteil weiter im Detail dargestellt, dieses kann prinzipiell als Dreh- oder Linearlager ausgestaltet sein. Wie bereits erwähnt, kann die elektrische Zuleitung dann ferner auch über mehrere Kontakte geführt sein, sind also insbesondere auch Kombinationen aus dreh- und verschiebbarer Lagerung bzw. mehrere Lager desselben Typs möglich.

Eine bevorzugte Ausführungsform betrifft ein Drehlager, bei dem das Führungs- oder das Bewegungsteil eine Achse ist, an welcher die beiden Teile zueinander verdrehbar geführt sind. Dabei weist die Achse ein Leiterteil auf, das eine der Anlageflächen des Kontakts bildet, vorzugsweise ein über den Drehwinkelbereich durchgehendes Leiterteil. Hat die Achse bspw. eine Zylinderform, kann in einem einfachen Fall z. B. ein elektrisch leitender Vollzylinder, etwa aus Metall, die Achse und zugleich das Leiterteil bilden. Generell kann auch die Achse das Bewegungsteil mit der Induktionsspule daran sein, bevorzugt ist die Achse das Führungsteil und ist daran drehbar ein Schlitten als Bewegungsteil angeordnet.

Wie bereits erwähnt, ist die Induktionsspule bevorzugt über zwei Zuleitungen angeschlossen; bevorzugt beinhaltet die Gleitfläche des Gleitlagers entsprechend zwei Kontaktflächen, nämlich je Zuleitung eine.

Konkret im Falle des Drehlagers könnte die Achse dann bspw. zwei Leiterteile derart aufweisen, dass das eine davon ein Kernteil der Achse und das andere ein Mantelteil bildet. Sind Kern- und Mantelteil zueinander isoliert, können sie jeweils einer anderen Zuleitung zugehörig sein. Der Schlitten kann zwei ebenfalls gegeneinander elektrisch isolierte Kontaktelemente aufweisen, wovon eines mit dem Mantel- und das andere mit dem Kernteil eine Kontaktfläche bildet. Dazu kann sich das Kernteil bspw. axial über das Mantelteil hinaus erstrecken und die Kontaktfläche dort realisiert sein. Es können aber bspw. auch das Mantelteil und ein Isolator umlaufend (vorzugsweise vollständig umlaufend) unterbrochen sein, wobei das eine der Kontaktelemente des Schlittens dann im Bereich dieser Unterbrechung an dem Kernteil anliegt, und dabei bevorzugt gegen das Mantelteil gesondert isoliert ist (vgl. Figur 5 zur Illustration).

Bei einer bevorzugten Ausführungsform ist das Bewegungsteil und/oder das Führungsteil eine Schiene. Bevorzugt ist das eine Teil eine Schiene und das andere ein daran geführter Schlitten, wenngleich im Allgemeinen auch zwei aneinander geführte Schienen möglich sind. Diese Ausgestaltung betrifft also letztlich ein Linerarlager, wobei die Bewegungsstrecke im Allgemeinen auch gekrümmt/kurvig sein kann, bevorzugt jedoch geradlinig ist. Ferner kann im Allgemeinen auch im selben Lager eine Kombination aus Translation und Drehen realisiert sein (etwa wenn der wie vorstehend beschrieben drehbar an der Achse geführte Schlitten zusätzlich entlang dieser verschiebbar ist), bevorzugt ermöglicht das Linearlager jedoch eine ausschließlich translatorische Verschiebbarkeit.

Unabhängig davon im Einzelnen weist die Schiene entlang der Bewegungsstrecke, die das Lager ermöglicht, ein Leiterteil auf, bevorzugt ein entlang der Bewegungsstrecke durchgehendes Leiterteil. Dieses bildet eine der Anlageflächen des Kontakts. Vorzugsweise weist die Schiene auch ein zweites Leiterteil auf, das der anderen Zuleitung zugehörig ebenfalls eine Anlagefläche bildet (für deren Kontakt). Das erste und das zweite Leiterteil der Schiene können bspw. über ein Gas, insbesondere Luft, zueinander beabstandet vorgesehen und so elektrisch bzw. thermisch zueinander isoliert sein. Bevorzugt kann als Isolator aber auch ein Festkörper dazwischen angeordnet sein, bspw. eine Keramik.

In bevorzugter Ausgestaltung ist die Schiene mit einem daran geführten Schlitten vorgesehen, der ein Kontaktelement als Teil der elektrischen Zuleitung aufweist. Das Leiterteil der Schiene bildet dann die eine der Anlageflächen, und das Kontaktelement des Schlittens die andere. Die Gleitfläche, die Schiene und Schlitten aneinander haben, ist über die Bewegungsstrecke hinweg bevorzugt konstant (bspw. im Unterschied zu zwei aneinander geführten Schienen); gleiches gilt bevorzugt für die Kontaktfläche(n).

Generell können die Schiene und/oder der Schlitten bzw. auch die vorstehend beschriebene Achse und/oder der daran geführte Schlitten gekühlt werden, also bspw. von einem Kühlkanal bzw. Kühlkanälen durchzogen sein, durch die eine Kühlflüssigkeit bzw. ein Prozessgas geführt wird. Eine Kühlung kann thermischen Dehnungen bzw. Dehnungsunterschieden vorbeugen helfen. So lässt sich bspw. die Beweglichkeit des Schlittens erhalten bzw. kann einer Verschlechterung/Unterbrechung des elektrischen Kontakts entgegengewirkt werden.

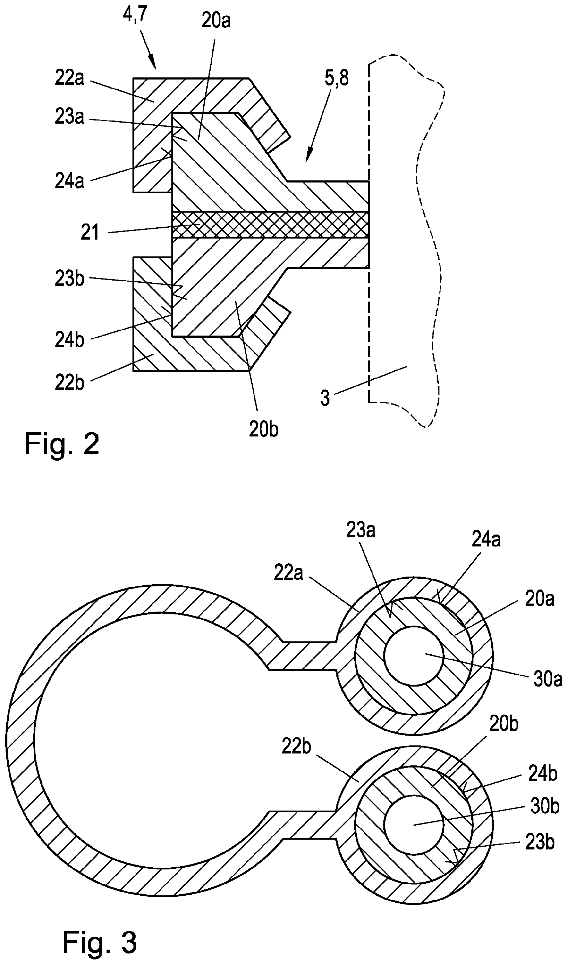

Bei einer bevorzugten Ausführungsform umgreift der Schlitten die Schiene zumindest teilweise, sind Schlitten und Schiene also nach Art einer Profilschienenführung formschlüssig beisammen gehalten. Dies bezieht sich auf senkrecht zur Bewegungsstrecke liegende Schnittebenen (eine jeweilige Schnittebene liegt senkrecht zur Bewegungsrichtung in einem jeweiligen Punkt auf der Strecke), Schlitten und Schiene sind so also in Bezug auf Richtungen senkrecht zur Bewegungsstrecke zusammengehalten. Der Schlitten kann die Schiene dazu auch nur teilweise umgreifen (vgl. Figur 2 zur Illustration), oder auch vollständig.

Eine Anordnung aus Schlitten und Schiene kann bevorzugt auch dahingehend optimiert sein, dass die beiden zur Verwirklichung eines guten Kontakts aneinandergepresst werden, bspw. mit einem Federelement bzw. einer Schraubenkonstruktion. Eine Optimierungsgröße kann bspw. die Gleitfläche/Kontaktfläche sein, die je nach zu übertragender Leistung hinreichend groß zu gestalten ist. Die Schiene kann idealerweise möglichst steif gestaltet werden, was eine gute Führung ermöglichen und auch das Andrücken des Schlittens vereinfachen helfen kann.

In bevorzugter Ausgestaltung ist der Schlitten das Bewegungsteil, an dem die Induktionsspule angeordnet und dabei elektrisch leitend mit dem bzw. den Kontaktelement(en) des Schlittens verbunden ist. Die Schiene ist entsprechend das Führungsteil. Generell ist das Führungsteil, bevorzugt die Schiene, relativ zur Bauteil-Platziereinheit nicht notwendigerweise lagefixiert, sondern kann es auch seinerseits beweglich geführt sein. Unabhängig davon, ob lagefixiert oder geführt, kann eine Montage der Schiene am Gehäuse des Schwingkreises bevorzugt sein. Das Gehäuse beinhaltet den Kondensator, ein elektrisch funktionaler Schwingkreis besteht dann nach Ausschluss der Induktionsspule (gleichwohl wird die Einheit mit dem Kondensator als "Schwingkreis" bezeichnet).

Im Folgenden werden nun Möglichkeiten erläutert, wie an einer gemeinsamen Zuleitung verschiedene Lager kombiniert werden können, um unterschiedliche Bewegungsräume aufzuspannen. Dabei wird von einer Schiene als Bestandteil ausgegangen, wobei im Allgemeinen auch allein mit der Kombination von Drehgelenken eine dreidimensionale Positionierbarkeit realisiert werden könnte.

Bei einer bevorzugten Ausführungsform ist die Schiene selbst relativ zu der Bauteil-Platziereinheit drehbar geführt, wobei die Drehachse und die durch die Schiene vorgegebene Bewegungsstrecke bevorzugt senkrecht aufeinander stehen (im Allgemeinen könnten sie auch zusammenfallen, die Schiene also verkippbar sein). Das Drehlager ist bevorzugt ein Gleitlager, dessen Gleitfläche zugleich eine elektrische Kontaktfläche bildet, über welche die elektrische Zuleitung geführt ist. Es wird ausdrücklich auf die vorstehenden Ausführungen zur möglichen Ausgestaltung eines Drehlagers verwiesen.

Bei einer bevorzugten Ausführungsform ist zusätzlich zu der ersten eine zweite Schiene vorgesehen, wobei die beiden Schienen aneinander geführt und dabei relativ zueinander entlang einer zweiten Bewegungsstrecke bewegbar sind. Diese zweite Bewegungsstrecke erstreckt sich schräg zu der durch die erste Schiene festgelegten ersten Bewegungsstrecke, vorzugsweise senkrecht dazu. Gemeinsam können die beiden Schienen also ein zweidimensionales Koordinatensystem aufspannen. Dieses kann um eine weitere Lagerung ergänzt zu einem dreidimensionalen Koordinatensystem ausgebaut werden, etwa um ein Drehlager ergänzt zu einem Zylinderkoordinatensystem oder um eine weitere (dritte Schiene) ergänzt zu einem dreidimensionalen kartesischen Koordinatensystem.

Die zweite Schiene weist bevorzugt analog der vorstehenden Beschreibung entlang der zweiten Bewegungsstrecke ein Leiterteil auf, das eine Anlagefläche eines zweiten Kontakts bildet. Über diesen zweiten Kontakt sind das Leiterteil der ersten Schiene und jenes der zweiten Schiene elektrisch leitend miteinander verbunden. Auf der zweiten Schiene kann bspw. ein Schlitten verschiebbar geführt sein, an dem dann lagefixiert dazu die erste Schiene befestigt ist (deren Leiterteil ist dann elektrisch leitend mit dem Kontaktelement des Schlittens verbunden). Analog könnte dann auch eine dritte Schiene integriert werden, es könnte also die zweite Schiene an einem an der dritten Schiene geführten Schlitten befestigt sein.

Die Erfindung betrifft auch eine Vorrichtung zur generativen Fertigung eines Bauteils aus einem Pulverbett, die eine vorliegend offenbarte Induktionsvorrichtung aufweist. Die "Bauteil-Platziereinheit" ist dann eine Pulverbettaufnahme, in der entsprechend auch das Bauteil während seiner schichtweisen Herstellung bzw. am Ende des Fertigungsprozesses dann das fertige Bauteil angeordnet ist. Relativ zu der Pulverbettaufnahme ist die Induktionsspule mittels der Positioniereinheit versetzbar, und das Bauteil ist mit der Induktionsspule während seiner Herstellung, die durch bereichsweises Verfestigen des Pulverbetts durch Bestrahlung erfolgt, induktiv heizbar.

Wenngleich im Allgemeinen bspw. auch eine flächig bestrahlende Quelle, z. B. in Verbindung mit einer Maskierung zur Auswahl des zu verfestigenden Pulverbettbereichs, denkbar ist, ist eine gebündelt emittierende Strahlquelle bevorzugt. Der Strahl wird über das Pulverbett bewegt (dieses wird "abgerastert"), und es kann durch selektives Ein- und Ausschalten des Strahls dabei der gewünschte Bereich bestrahlt werden. Als Strahlquelle ist bspw. auch eine Elektronenstrahlquelle möglich, bevorzugt ist jedoch eine Laserquelle, etwa ein CO₂-Laser, Nd:YAG-Laser bzw. Yb-Faserlaser, oder aber auch ein Diodenlaser. Die generative Fertigung kann insbesondere ein direktes Metalllasersintern (*Direct Metal Laser Sintering*, DMLS) bzw. selektives Laserschmelzen (*Selective Laser Melting*, SLM) sein.

Im Rahmen der generativen Fertigung kann die erfindungsgemäße Induktionsvorrichtung etwa insoweit besondere Vorteile bieten, als die Fertigung vielfach in einer Prozesskammer erfolgt. Eine von der Lagerung im Kontakt abgesehen starre Zuleitung der Induktionsspule kann dann bspw. beim Einsatz in Schutzgasatmosphäre Vorteile bieten, es kann nämlich bspw. das Abdichten der Prozesskammer vereinfacht sein, wenn nicht gegen bewegte Teile (z. B. ein Kupferseil), sondern gegen ein starres Zuleitungsteil gedichtet werden muss.

Generell weist die erfindungsgemäße Vorrichtung zur generativen Fertigung bevorzugt einen Beschichter auf, der über die Pulverbettaufnahme bewegbar geführt ist. Mit dem Beschichter kann das Pulverbett schichtweise aufgebracht werden, also jeweils eine neue Schicht, nachdem die vorherige durch Bestrahlen bereichsweise verfestigt wurde. Die Pulverbettaufnahme an sich kann im einfachsten Fall eine Auflage sein, bevorzugt ist eine nach oben hin offene Kavität, in der das Pulverbett angeordnet ist.

Bei einer bevorzugten Ausführungsform ist die Schiene (zum Führen der Induktionsspule) an dem Beschichter selbst oder einer Führung des Beschichters befestigt. Dabei kann die Schiene relativ zu dem Beschichter lagefixiert oder bewegbar geführt sein. Dies kann bspw. eine platzsparende Integration ermöglichen; zudem kann z. B. auch der Aufwand einer Ansteuerung verringert sein, wenn bereits anordnungsbedingt einer Kollision von Beschichter und Induktionsspule vorgebeugt wird. Der Beschichter und das Leiterteil der Schiene können zueinander isoliert sein, um elektrischen Feldern vorzubeugen, die eine gezielte Vorwärmung stören könnten.

Bei einer bevorzugten Ausführungsform ist zusätzlich zu der ersten eine zweite Induktionsspule vorgesehen, die ihrerseits mit einer zweiten Positioniereinheit relativ zur Pulverbettaufnahme bewegbar ist und deren elektrische Zuleitung ebenfalls über einen erfindungsgemäßen Kontakt geführt ist. Selbstverständlich ist auch eine weitere Induktionsspule möglich, bevorzugt sind höchstens drei. Sämtliche vorstehend und im Rahmen der Ansprüche für die (erste) Induktionsspule, ihre Positioniereinheit und ihre elektrische Zuleitung angegebenen Konkretisierungen können auch für eine zweite/weitere Induktionsspule(n) bevorzugt sein. Im Allgemeinen ist auch denkbar, dass sich Induktionsspulen bspw. Teile eines Schienensystems teilen, bevorzugt hat jedoch jede Induktionsspule jeweils eine eigene mechanische Führung und gesonderte elektrische Zuleitungen. Bevorzugt kann ein Aufbau derart sein, dass bereits durch die Führung der Induktionsspulen einer Kollision vorgebeugt bzw. eine solche gänzlich vermieden werden kann.

Die Erfindung betrifft auch ein Verfahren zum Herstellen eines Bauteils durch generative Fertigung mit einer vorliegend offenbarten Vorrichtung, wobei die Induktionsspule mit der Positioniereinheit in unterschiedliche Relativanordnungen zur Pulverbettaufnahme gebracht wird. Dabei werden die Anlageflächen des Kontakts in Kontaktlage relativ zueinander verschoben, bevorzugt gleiten sie aneinander. Das Bauteil wird während der Herstellung zumindest zeitweilig bereichsweise induktiv geheizt bzw. erwärmt (die beiden Begriffe werden vorliegend synonym verwendet).

Vorzugsweise ist das generativ gefertigte Bauteil eine Komponente eines Strahltriebwerks, bspw. eine Schaufel. Bevorzugt kann das induktive Heizen insbesondere bei der Verarbeitung schwer schweißbarer Materialien sein, etwa hochlegierter Stähle bzw. ausscheidungsgehärteter Werkstoffe (z. B. Al, Ni etc.). Ein Vorheizen kann bspw. auch bei Werkstoffen hoher Wärmeleitfähigkeit (z. B. Al, Cu, Ag) Vorteile bieten.

### Kurze Beschreibung der Zeichnungen

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht immer im Einzelnen zwischen den Anspruchskategorien unterschieden wird.

Im Einzelnen zeigt
- Figur 1: einen Teil einer Vorrichtung zur generativen Fertigung aus einem Pulverbett samt einer erfindungsgemäßen Induktionsvorrichtung in einer Aufsicht;
- Figur 2: eine erste Möglichkeit zur Gestaltung des Schienensystems der Vorrichtung gemäß Figur 1 in einem schematischen Schnitt;
- Figur 3: eine zweite Möglichkeit zur Gestaltung des Schienensystems der Vorrichtung gemäß Figur 1 in einem schematischen Schnitt;
- Figur 4: eine Möglichkeit zur Gestaltung eines Drehlagers für genau eine elektrische Zuleitung;
- Figur 5: eine Möglichkeit zur Gestaltung eines Drehlagers für zwei elektrische Zuleitungen.

### Bevorzugte Ausführung der Erfindung

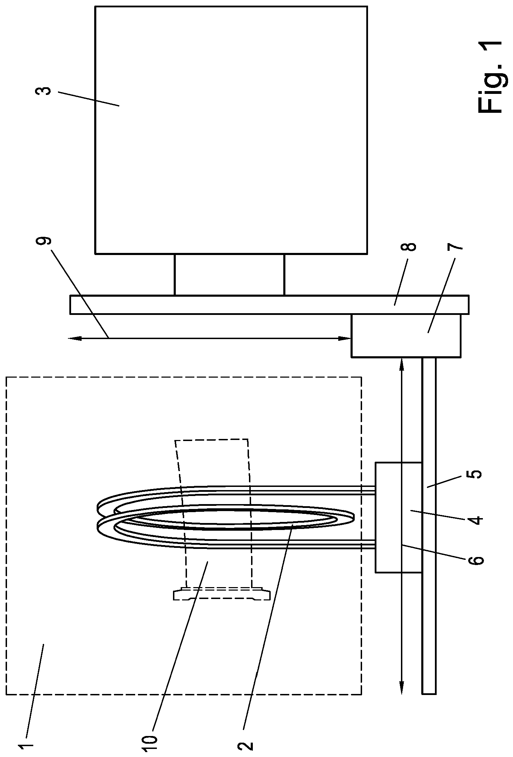

Im Folgenden wird eine erfindungsgemäße Induktionsvorrichtung im Kontext der bevorzugten Integration in eine Vorrichtung zur generativen Bauteilfertigung illustriert; in analoger Weise wäre aber bspw. auch eine Integration in eine Schweißanlage möglich. Fig. 1 zeigt die generative Fertigungsvorrichtung in einer Aufsicht. Das Bauteil 10, vorliegend eine strichliert angedeutete Schaufel (für z. B. eine Turbine), wird aus einem Pulverbett schichtweise durch lokales Aufschmelzen mit einem Faserlaser (nicht dargestellt, in der Betrachterebene angeordnet) aufgebaut. Eine Aufnahme 1 für das Pulverbett ist in der Figur strichliert eingezeichnet. Die Aufbaurichtung steht senkrecht auf der Zeichenebene, nach dem bereichsweisen Aufschmelzen und damit Verfestigen einer jeweiligen Schicht wird das Bauteil 10 in die Zeichenebene und damit in die Pulverbettaufnahme 1 hinein abgesenkt und mit der nächsten Pulverschicht bedeckt.

Beim Aufschmelzen des Pulvers mit dem Laserstrahl wird dieses und der bereits hergestellte Teil des Bauteils 10 stark erhitzt. Um einer Rissbildung aufgrund von Temperaturgradienten vorzubeugen, weist die Vorrichtung eine Induktionsspule 2 auf, mit der das Bauteil 10 während der Herstellung bereichsweise induktiv beheizt werden kann. Dazu ist die Induktionsspule 2 elektrisch leitend mit einem Schwingkreis 3 (letztlich einem Kondensator) verbunden und wird mit einer Wechselspannung beaufschlagt.

Um die Position der Induktionsspule 2 relativ zum Bauteil 10 auf eine möglichst gute induktive Kopplung hin einstellen zu können, ist die Induktionsspule 2 relativ zu der Pulverbettaufnahme 1 bewegbar geführt. Die Induktionsspule 2 ist an einem Bewegungsteil 4, nämlich einem ersten Schlitten, angeordnet, der an einer ersten Schiene als Führungsteil 5 entlang einer ersten Bewegungsstrecke 6 bewegbar ist. Die erste Schiene ist ihrerseits an einem zweiten Schlitten 7 angeordnet, der an einer zweiten Schiene 8 entlang einer zweiten Bewegungsstrecke 9 verschiebbar geführt ist.

Die erste 6 und die zweite Bewegungsstrecke 9 stehen senkrecht aufeinander, die Induktionsspule 2 kann flächig über die Pulverbettaufnahme 2 bewegt werden. Wie insbesondere anhand der folgenden Figuren verdeutlicht, besteht eine Besonderheit der Lagerung darin, dass sie zugleich einen elektrischen Kontakt vermittelt. Damit ist zur elektrischen Verbindung von Induktionsspule 2 und Schwingkreis 3 kein gesonderter elektrischer Anschluss notwendig, insbesondere kein flexibles Kupferkabel bzw. -seil, was die Standzeit erhöhen helfen kann. Es wird ausdrücklich auch auf die Ausführungen und Vorteilsangaben in der Beschreibungseinleitung verwiesen.

Figur 2 zeigt Bewegungs- und Führungsteil 4, 5, also die erste Schiene und den ersten Schlitten, in einem Schnitt, und zwar bei senkrecht zur zweiten Bewegungsstrecke 6 liegender Schnittebene. Die zweite Schiene 8 und der zweite Schlitten 7 sind analog aufgebaut (Figur 2 illustriert also auch diese, wobei der in Figur 2 strichlierte Teil die Montage der zweiten Schiene 8 am Schwingkreis 3 zeigt). Die jeweilige Schiene weist jeweils zwei Leiterteile 20a, b auf, die über einen dazwischen angeordneten Isolator 21 zueinander elektrisch isoliert sind. Der jeweilige Schlitten weist zwei Kontaktelemente 22a, b auf, wovon das eine mit einer Anlagefläche 23a flächig an einer Anlagefläche 24a des Leiterteils 20a anliegt. Gleichermaßen liegt das zweite Kontaktelement 22b mit einer Anlagefläche 23b flächig an einer Anlagefläche 24b des zweiten Leiterteils 20b an.

Über die jeweilige Kontaktfläche, an welcher die Anlageflächen 23a, 24a; 23b, 24b jeweils aneinander anliegen, ist also das jeweilige Kontaktelement 22a, b elektrisch leitend mit dem jeweiligen Leiterteil 20a, b verbunden. Gleichzeitig dienen die Kontaktflächen als Gleitfläche, ist also der jeweilige Schlitten darüber in Form eines Gleitlagers an der jeweiligen Schiene geführt. Die zweite Schiene 8 ist an dem Schwingkreis 3 befestigt (der strichliert gezeigte Teil gilt nur für die zweite Schiene 8).

Die erste Schiene ist an dem zweiten Schlitten 7 angeordnet (nicht dargestellt, deren Leiterteile sind jeweils mit einem jeweiligen Kontaktelement des zweiten Schlittens verbunden). Im Falle des ersten Schlittens ist jedes der Kontaktelemente 22a, b mit einer Elektrode der Induktionsspule 2 verbunden (ebenfalls nicht dargestellt).

Figur 3 zeigt eine alternative Möglichkeit zur Ausgestaltung von Schlitten und Schiene, wiederum in einem senkrecht zur Bewegungsstrecke liegenden Schnitt. Die Leiterteile 20a, b der Schiene sind in diesem Fall als vergleichsweise dickwandige Hohlrohre ausgebildet, deren jeweilige Außenmantelfläche die jeweilige Anlagefläche 24a, b bildet. In Figur 3 ist der erste Schlitten illustriert, an dessen Kontaktelemente 22a, b die Induktionsspule 2 angeschlossen ist (vorliegend sind vereinfacht der Schlitten und die Induktionsspule als ein durchgehendes Teil dargestellt). Jeweils innenseitig begrenzen die Leiterteile 20a, b ein jeweiliges Leervolumen 30a, b, in dem ein Kühlmittel geführt werden kann. Entsprechende Kühlkanäle wären auch bei der Ausführungsform gemäß Figur 2 möglich.

Im Falle von Figur 1 ist eine Anordnung mit zwei Schienen gezeigt, in einem einfachen Fall könnte aber auch nur eine einzige Schiene vorgesehen und bspw. an dem Schwingkreis 3 befestigt sein. Zudem ist bspw. auch eine Kombination aus einem Linearlager mit Schienenführung und einem Drehlager möglich. Die Figuren 4 und 5 illustrieren, wie sich das erfindungsgemäße Konzept, nämlich die Integration von elektrischer Kontakt- und mechanischer Gleitfläche, bei Drehlagern realisieren ließe.

Das Drehlager gemäß Figur 4 weist einen metallischen Vollzylinder als Achse 40 auf. An der Achse 40 sind ein erster Drehleiter 41a und ein zweiter Drehleiter 41b angeordnet, die über die Achse 40, die insgesamt ein Leiterteil darstellt, elektrisch leitend miteinander verbunden sind. Die Drehleiter 41a, b können um die Achse 40 zueinander verdreht werden. Vorliegend ist dazwischen ein Axialisolator 42 angeordnet, bspw. zur Optimierung der mechanischen Reibung. Ebenso ist aber auch eine analoge Ausführungsform ohne Axialisolator 42 denkbar, bei welcher die Drehleiter 41a, b dann direkt aneinander anliegen (die Achse 40 muss dann nicht zwingend elektrisch leitend sein). Ein solcher Drehleiter könnte dann bspw. als Schiene genutzt einen Schlitten linear darauf verschiebbar führen oder auch seinerseits direkt die Induktionsspule tragen.

Figur 5 illustriert ein Drehlager, über welches zwei elektrische Zuleitungen geführt sind. Gezeigt ist ein Schnitt in einer die Drehachse beinhaltenden Schnittebene. Die Achse 40 weist ein Kernteil 40a auf, nämlich einen metallischen Vollzylinder. Radial außerhalb davon ist ein ebenfalls metallisches Mantelteil 40b angeordnet, wobei das Kernteil 40a und das Mantelteil 40b über einen Isolator 40c zueinander isoliert sind. Das Kernteil 40a bildet ein erstes Leiterteil und das Mantelteil 40b ein zweites.

Auf der Achse 40 ist drehbar ein Schlitten angeordnet, der ein erstes Kontaktelement 22a aufweist, das mit einer Anlagefläche 23a an einer Anlagefläche 24a des Kernteils 40a anliegt. Dazu durchsetzt das erste Kontaktelement 22a das Mantelteil 40b radial, zu dem es axial und an dessen Außenseite über einen Isolator 50 elektrisch isoliert ist. Das zweite Kontaktelement 22b des Schlittens liegt mit seiner Anlagefläche 23b an der Anlagefläche 24b des Mantelteils 40b an. An den drehbar geführten Kontaktelementen 22a, b könnte nun bspw. direkt die Induktionsspule 2 oder könnte eine Schiene befestigt sein, auf welcher die Induktionsspule 2 dann z. B. axial verschiebbar geführt ist. Der dargestellte Teil ist um eine Rotationsachse 51 rotationssymmetrisch.

**BEZUGSZEICHENLISTE**

| | |
|---|---|
| Pulverbettaufnahme | 1 |
| Induktionsspule | 2 |
| Schwingkreis | 3 |
| Bewegungsteil (erster Schlitten) | 4 |
| Führungsteil (erste Schiene) | 5 |
| Erste Bewegungsstrecke | 6 |
| Zweiter Schlitten | 7 |
| Zweite Schiene | 8 |
| Zweite Bewegungsstrecke | 9 |
| Bauteil | 10 |
| Leiterteile | 20a, b |
| Isolator | 21 |
| Kontaktelemente | 22a, b |
| Anlageflächen | 23a, b |
| Anlageflächen | 24a, b |
| Leervolumen | 30a, b |
| Achse | 40 |
| Kernteil | 40a |
| Mantelteil | 40b |
| Isolator | 40c |
| Drehleiter | 41a, b |
| Axialisolator | 42 |
| Isolator | 50 |
| Rotationsachse | 51 |

## Patentansprüche

1. Induktionsvorrichtung zur induktiven Erwärmung eines Bauteils (10), mit
einer Bauteil-Platziereinheit für das Bauteil (10),
einer Induktionsspule (2), mit welcher das Bauteil (10) zumindest bereichsweise induktiv heizbar ist,
einer elektrischen Zuleitung für die Induktionsspule (2) und
einer Positioniereinheit (4, 5), an welcher die Induktionsspule derart angeordnet ist, dass sie mit der Positioniereinheit (4, 5) in unterschiedliche Relativanordnungen zu der Bauteil-Platziereinheit gebracht werden kann,
wobei die elektrische Zuleitung über einen Kontakt geführt ist, den aneinander anliegende Anlageflächen (23, 24) bilden, die bei einem Versetzen der Induktionsspule (2) mittels der Positioniereinheit (4, 5) in die unterschiedlichen Relativanordnungen in Kontaktlage aneinander relativ zueinander verschoben werden.

2. Induktionsvorrichtung nach Anspruch 1, bei welcher die Positioniereinheit (4, 5) ein Führungsteil (5) und ein an diesem bewegbar geführtes Bewegungsteil (4) aufweist, an welchem Bewegungsteil (4) die Induktionsspule (2) angeordnet ist und mit der geführten Bewegung in die unterschiedlichen Relativanordnungen zu der Bauteil-Platziereinheit gebracht werden kann.

3. Induktionsvorrichtung nach Anspruch 2, bei welcher das Bewegungsteil (4) über ein Gleitlager an dem Führungsteil (5) bewegbar geführt ist.

4. Induktionsvorrichtung nach Anspruch 3, bei welcher eine Kontaktfläche des Kontakts, an welcher die Anlageflächen (23, 24) aneinander anliegen, und eine Gleitfläche des Gleitlagers, an welcher sich das Führungsteil (5) und das Bewegungsteil (4) gegeneinander abstützen, zumindest teilweise zusammenfallen.

5. Induktionsvorrichtung nach Anspruch 4, bei welcher eines von dem Bewegungs- (4) und dem Führungsteil (5) eine Achse (40) ist, an welcher das Bewegungs- (4) und das Führungsteil (5) zueinander über einen Drehwinkelbereich verdrehbar geführt sind, wobei die Achse (40) über den Drehwinkelbereich ein Leiterteil (40, 40a, 40b) aufweist, das Teil der elektrischen Zuleitung ist und eine der Anlageflächen (23, 24) des Kontakts bildet.

6. Induktionsvorrichtung nach Anspruch 4 oder 5, bei welcher zumindest eines von dem Bewegungs- (4) und dem Führungsteil (5) eine Schiene ist, an welcher das Bewegungs- (4) und das Führungsteil (5) entlang einer Bewegungsstrecke (6) zueinander verschiebbar geführt sind, wobei die Schiene entlang der Bewegungsstrecke (6) ein Leiterteil (20) aufweist, das Teil der elektrischen Zuleitung ist und eine der Anlageflächen (23, 24) des Kontakts bildet.

7. Induktionsvorrichtung nach Anspruch 6, bei welcher das Bewegungs- (4) und das Führungsteil (5) die Schiene und ein daran geführter Schlitten sind, wobei der Schlitten ein Kontaktelement (22) aufweist, das Teil der elektrischen Zuleitung ist und die andere der Anlageflächen (23, 24) bildet.

8. Induktionsvorrichtung nach Anspruch 7, bei welcher der Schlitten die Schiene in einer senkrecht zur Bewegungsstrecke (6) liegenden Schnittebene betrachtet zumindest teilweise umgreift.

9. Induktionsvorrichtung nach Anspruch 7 oder 8, bei welcher der Schlitten das Bewegungsteil (4) ist, an dem die Induktionsspule (2) angeordnet und dabei elektrisch leitend mit dem Kontaktelement (22) des Schlittens verbunden ist.

10. Induktionsvorrichtung nach einem der Ansprüche 6 bis 9, bei welcher die Schiene über ein Gleitlager relativ zu der Bauteil-Platziereinheit drehbar geführt ist, wobei eine Gleitfläche des Gleitlagers zugleich einen Kontakt bildet, über den die elektrische Zuleitung geführt ist.

11. Induktionsvorrichtung nach einem der Ansprüche 6 bis 10 mit zusätzlich zu der ersten Schiene einer zweiten Schiene (8), wobei die erste und die zweite Schiene (8) entlang einer zweiten Bewegungsstrecke (9), die schräg zu der ersten Bewegungsstrecke (6) liegt, zueinander bewegbar sind und die zweite Schiene (8) entlang der zweiten Bewegungsstrecke (9) ein Leiterteil aufweist, das eine Anlagefläche eines zweiten Kontakts bildet, über den das Leiterteil (20) der ersten Schiene und das Leiterteil der zweiten Schiene (8) elektrisch leitend miteinander verbunden sind.

12. Vorrichtung zur generativen Fertigung eines Bauteils (10) aus einem Pulverbett, mit
einer Induktionsvorrichtung nach einem der vorstehenden Ansprüche und einer Quelle zum Bestrahlen des Pulverbetts und damit Verfestigen für einen schichtweisen Aufbau des Bauteils (10),
wobei die Bauteil-Platziereinheit als Pulverbettaufnahme (1) zum Aufnehmen des Pulverbetts ausgebildet ist und das Bauteil (10) mit der Induktionsspule (2) während des schichtweisen Aufbaus zumindest bereichsweise induktiv heizbar ist.

13. Vorrichtung nach Anspruch 12 in Verbindung mit einem der Ansprüche 9 bis 11 mit einem Beschichter, der zum schichtweisen Aufbringen des Pulverbetts über die Pulverbettaufnahme (1) bewegbar ist, wobei die Schiene an einer Führung des Beschichters oder dem Beschichter selbst befestigt ist, und zwar relativ zu dem Beschichter bewegbar geführt oder lagefixiert.

14. Vorrichtung nach Anspruch 12 oder 13 mit einer zweiten Induktionsspule zum zumindest bereichsweisen induktiven Heizen des Bauteils (10) während des schichtweisen Aufbaus, wobei die zweite Induktionsspule an einer zweiten Positioniereinheit derart angeordnet ist, dass sie mit der zweiten Positioniereinheit in unterschiedliche Relativanordnungen zu der Pulverbettaufnahme (1) gebracht werden kann, wobei eine elektrische Zuleitung der zweiten Induktionsspule über einen zweiten Kontakt geführt ist, den aneinander anliegende Anlageflächen bilden, die bei einem Versetzen der zweiten Induktionsspule mittels der zweiten Positioniereinheit in die unterschiedlichen Relativanordnungen in Kontaktlage aneinander relativ zueinander verschoben werden.

15. Verfahren zum Herstellen eines Bauteils (10) durch generative Fertigung mit einer Vorrichtung nach einem der Ansprüche 12 bis 14,
bei welchem Verfahren die Induktionsspule (2) mit der Positioniereinheit (4, 5) in unterschiedliche Relativanordnungen zu der Pulverbettaufnahme (1) gebracht wird,
wobei bei dem Versetzen der Induktionsspule (2) mittels der Positioniereinheit (4, 5) in die unterschiedlichen Relativanordnungen die aneinander anliegenden Anlageflächen (23, 24) des Kontakts in Kontaktlage aneinander relativ zueinander verschoben werden.

## Claims

1. Induction device for inductively heating a component (10), comprising a component placement unit for the component (10), an induction coil (2) by means of which the component (10) can be inductively heated at least in regions, an electrical supply line for the induction coil (2), and a positioning unit (4, 5) on which the induction coil is arranged such that it can be brought into different relative arrangements with respect to the component placement unit by the positioning unit (4, 5), wherein the electrical supply line is guided over a contact which is formed by bearing surfaces (23, 24) that abut one another and are slid relative to one another into a position in which they contact one another when the induction coil (2) is shifted into the different relative arrangements by means of the positioning unit (4, 5).

2. Induction device according to claim 1, wherein the positioning unit (4, 5) has a guide part (5) and a movement part (4) that is movably guided on said guide part, on which movement part (4) the induction coil (2) is arranged and can be brought into the different relative arrangements with respect to the component placement unit by the guided movement.

3. Induction device according to claim 2, wherein the movement part (4) is movably guided over a slide bearing on the guide part (5).

4. Induction device according to claim 3, wherein a contact surface of the contact, on which surface the bearing surfaces (23, 24) abut one another, and a sliding surface of the slide bearing, on which surface the guide part (5) and the movement part (4) are supported against one another, coincide at least in part.

5. Induction device according to claim 4, in which one of the movement part (4) and the guide part (5) is a shaft (40) on which the movement part (4) and the guide part (5) are rotatably guided relative to one another over a rotational angle range, wherein the shaft (40) has a conductor part (40, 40a, 40b) over the rotational angle range, which conductor part is part of the electrical supply line and forms one of the bearing surfaces (23, 24) of the contact.

6. Induction device according to either claim 4 or claim 5, in which at least one of the movement part (4) and the guide part (5) is a rail on which the movement part (4) and the guide part (5) are slidably guided relative to one another along a movement path (6), wherein the rail has a conductor part (20) along the movement path (6), which conductor part is part of the electrical supply line and forms one of the bearing surfaces (23, 24) of the contact.

7. Induction device according to claim 6, in which the movement part (4) and the guide part (5) are the rail and a carriage guided thereon, wherein the carriage has a contact element (22) which is part of the electrical supply line and forms the other of the bearing surfaces (23, 24).

8. Induction device according to claim 7, wherein the carriage encompasses the rail at least in part as viewed in a sectional plane perpendicular to the movement path (6).

9. Induction device according to either claim 7 or claim 8, wherein the carriage is the movement part (4) on which the induction coil (2) is arranged and thereby connected to the contact element (22) of the carriage so as to conduct electricity.

10. Induction device according to any of claims 6 to 9, in which the rail is rotatably guided relative to the component placement unit over a slide bearing, wherein a sliding surface of the slide bearing simultaneously forms a contact over which the electrical supply line is guided.

11. Induction device according to any of claims 6 to 10, comprising a second rail (8) in addition to the first rail, wherein the first and the second rail (8) can be moved relative to one another along a second movement path (9) which is diagonal with respect to the first movement path (6) and the second rail (8) has a conductor part along the second movement path (9), which conductor part forms a bearing surface of a second contact by means of which the conductor part (20) of the first rail and the conductor part of the second rail (8) are interconnected so as to conduct electricity.

12. Device for the rapid manufacturing of a component (10) from a powder bed, comprising an induction device according to any of the preceding claims and a source for irradiating the powder bed and therefore solidifying for layered construction of the component (10), wherein the component placement unit is designed as a powder bed receptacle (1) for receiving the powder bed and the component (10) together with the induction coil (2) can be inductively heated at least in regions during the layered construction.

13. Device according to claim 12 in conjunction with any of claims 9 to 11, comprising a coater which can be moved over the powder bed receptacle (1) in order to deposit the powder bed layer by layer, wherein the rail is fastened to a guide of the coater or to the coater itself, specifically movably guided or fixed in position relative to the coater.

14. Device according to either claim 12 or claim 13, comprising a second induction coil for inductively heating the component (10) at least in regions during the layered construction, wherein the second induction coil is arranged on a second positioning unit such that it can be brought into different relative arrangements with respect to the powder bed receptacle (1) by the second positioning unit, wherein an electrical supply line of the second induction coil is guided over a second contact which is formed by bearing surfaces that abut one another and are slid relative to one another into a position in which they contact one another when the second induction coil is shifted into the different relative arrangements by means of the second positioning unit.

15. Method for producing a component (10) by means of rapid manufacturing using a device according to any of claims 12 to 14, in which method the induction coil (2) is brought into different relative arrangements with respect to the powder bed receptacle (1) by the positioning unit (4, 5), wherein the bearing surfaces (23, 24) of the contact which abut one another are slid relative to one another into a position in which they contact one another when the induction coil (2) is shifted into the different relative arrangements by means of the positioning unit (4, 5).

## Revendications

1. Dispositif à induction pour le chauffage inductif d'un composant (10), comportant une unité de placement de composant pour le composant (10), une bobine d'induction (2), avec laquelle le composant (10) peut être chauffé au moins par zone par induction, une ligne d'alimentation électrique pour la bobine d'induction (2) et une unité de positionnement (4, 5) sur laquelle la bobine d'induction est disposée de telle sorte qu'elle peut être amenée avec l'unité de positionnement (4, 5) dans différents agencements relatifs par rapport à l'unité de placement de composant, la ligne d'alimentation électrique étant guidée par un contact, que forment des surfaces de contact (23, 24) adjacentes, qui sont déplacées les unes par rapport aux autres dans les différents agencements relatifs en position de contact lors d'un déplacement de la bobine d'induction (2) au moyen de l'unité de positionnement (4, 5).

2. Dispositif à induction selon la revendication 1, dans lequel l'unité de positionnement (4, 5) comporte une partie de guidage (5) et une partie mobile (4) guidée de manière mobile sur celle-ci, partie mobile (4) sur laquelle la bobine d'induction (2) est placée et peut être amenée par le mouvement guidé dans les différents agencements relatifs par rapport à l'unité de placement de composant.

3. Dispositif à induction selon la revendication 2, dans lequel la partie mobile (4) est guidée de manière mobile par l'intermédiaire d'un palier lisse sur la partie de guidage (5).

4. Dispositif à induction selon la revendication 3, dans lequel une surface de contact du contact sur laquelle s'appuient les surfaces de contact (23, 24), et une surface de glissement du pallier lisse sur laquelle la partie de guidage (5) et la pièce mobile (4) s'appuient l'une contre l'autre coïncident au moins partiellement.

5. Dispositif à induction selon la revendication 4, dans lequel l'une de la partie mobile (4) et de la partie de guidage (5) est un axe (40) sur lequel la partie mobile (4) et la partie de guidage (5) sont guidées de manière rotative l'une par rapport à l'autre sur une plage d'angle de rotation, l'axe (40) comprenant sur la plage d'angle de rotation une partie conductrice (40, 40a, 40b) faisant partie de la ligne d'alimentation électrique et formant l'une des surfaces de contact (23, 24) du contact.

6. Dispositif à induction selon la revendication 4 ou 5, dans lequel au moins l'une de la partie mobile (4) et de la partie de guidage (5) est un rail sur lequel la partie mobile (4) et la partie de guidage (5) sont guidées de manière coulissante l'une par rapport à l'autre le long d'une trajectoire de mouvement (6), le rail comportant le long de la trajectoire de mouvement (6) une partie conductrice (20) faisant partie de la ligne d'alimentation électrique et formant l'une des surfaces de contact (23, 24) du contact.

7. Dispositif à induction selon la revendication 6, dans lequel la partie mobile (4) et la partie de guidage (5) sont le rail et un chariot guidé sur celui-ci, le chariot comportant un élément de contact (22) faisant partie de la ligne d'alimentation électrique et formant l'autre des surfaces de contact (23, 24).

8. Dispositif à induction selon la revendication 7, dans lequel le chariot entoure au moins partiellement le rail dans un plan de coupe perpendiculaire à la trajectoire de déplacement (6).

9. Dispositif à induction selon la revendication 7 ou 8, dans lequel le chariot est la partie mobile (4) sur laquelle la bobine d'induction (2) est disposée et ainsi reliée électriquement de manière conductrice à l'élément de contact (22) du chariot.

10. Dispositif à induction selon l'une des revendications 6 à 9, dans lequel le rail est guidé de manière rotative par rapport à l'unité de placement de composant par l'intermédiaire d'un palier lisse, une surface de glissement du palier lisse formant simultanément un contact par lequel la ligne d'alimentation électrique est guidée.

11. Dispositif à induction selon l'une des revendications 6 à 10, comportant un second rail (8) en plus du premier rail, dans lequel le premier et le second rail (8) sont mobiles l'un par rapport à l'autre le long d'une seconde trajectoire de déplacement (9) qui est oblique par rapport à la première trajectoire de déplacement (6) et le second rail (8) comporte une partie conductrice le long de la seconde trajectoire de déplacement (9), qui forme une surface de contact d'un second contact, par l'intermédiaire duquel la partie conductrice (20) du premier rail et la partie conductrice du second rail (8) sont reliées entre elles de manière électriquement conductrice.

12. Dispositif pour la fabrication additive d'un composant (10) à partir d'un lit de poudre, comportant un dispositif d'induction selon l'une des revendications précédentes et une source pour irradier le lit de poudre et ainsi solidifier, en vue d'une élaboration en couches du composant (10), dans lequel l'unité de placement de composant est agencée sous forme de réceptacle à lit de poudre (1) pour recevoir le lit de poudre et le composant (10) est peut être chauffé par induction au moins par zone avec la bobine d'induction (2) pendant l'élaboration en couches.

13. Dispositif selon la revendication 12 en association avec l'une des revendications 9 à 11 comportant un système d'enduction mobile au-dessus du réceptacle à lit de poudre (1) pour l'application en couches du lit de poudre, dans lequel le rail est fixé à un guide du système d'enduction ou au système d'enduction lui-même, guidé de manière mobile ou fixé en place par rapport au système d'enduction.

14. Dispositif selon la revendication 12 ou 13 comportant une seconde bobine d'induction pour le chauffage inductif au moins par zone du composant (10) pendant l'élaboration en couches, la seconde bobine d'induction étant agencée sur une seconde unité de positionnement de telle sorte qu'elle peut être amenée avec la seconde unité de positionnement en différents agencements relatifs par rapport au réceptacle à lit de poudre (1), une ligne d'alimentation électrique de la seconde bobine d'induction étant guidée par l'intermédiaire d'un second contact, que forment des surfaces de contact adjacentes, qui sont déplacées l'une par rapport à l'autre en position de contact dans différents agencements relatifs lors d'un déplacement de la seconde bobine d'induction au moyen de la seconde unité de positionnement.

15. Procédé de fabrication d'un composant (10) par fabrication additive avec un dispositif selon l'une des revendications 12 à 14, dans lequel la bobine d'induction (2) est amenée avec l'unité de positionnement (4, 5) dans différents agencements relatifs par rapport au réceptacle à lit de poudre (1), les surfaces de contact adjacentes (23, 24) du contact étant déplacées l'une par rapport à l'autre en position de contact lors du déplacement de la bobine d'induction (2) dans les différents agencements relatifs au moyen de l'unité de positionnement (4, 5).
